# EUROPEAN PATENT APPLICATION

(11) **EP 4 703 083 A1**
(43) Date of publication of application: **04.03.2026**
(21) Application number: 25195199.2
(22) Date of filing: 11.08.2025
(51) Int. Cl.: B23Q 3/157

(54) **TOOL MAGAZINE FOR A MACHINING CENTER, AND MACHINING CENTER COMPRISING SAID MAGAZINE**

(30) Priority: 26.08.2024 IT 202400019231
(71) Applicant: PAOLINO BACCI S.R.L., 56021 Cascina (PI) (IT)
(72) Inventor: SPINELLI, Simone, 56021 Cascina (PI) (IT)
(74) Representative: Mannucci, Michele

(57) **Abstract**

The tool magazine (25) comprises a revolving holder (33) which rotates about a rotation axis (A-A). The revolving holder (33) comprises a set of first seats (47) for receiving tools (U) and a set of second seats (49) for receiving tools. The revolving holder (33) further comprises an inner edge (43.2), facing an inner volume (46) defined by the revolving holder (33), and an outer edge (43.1). The outer edge and the inner edge extend around the rotation axis. The first seats (47) are arranged along the outer edge (43.1) and face the opposite direction to the inner volume (46). The second seats (49) are arranged along the inner edge (43.2) and face the inner volume (46).

## Description

### TECHNICAL FIELD

The present invention relates to the field of numerically controlled machine tools or machining centers. Embodiments disclosed herein relate in particular to machining centers or machine tools for machining workpieces made of wood, light alloys, synthetic or polymeric materials, and the like. Specifically, the present invention relates in particular to improvements to tool magazines for numerically controlled machining centers or machine tools.

### BACKGROUND ART

In many industrial sectors, what are known as numerically controlled machining centers, or machine tools, are used to machine raw workpieces by chip removal using various types of tools, in order to obtain a finished product or a semi-finished product intended for subsequent further machining.

The work cycles using numerically controlled machine tools, or numerically controlled machining centers, may be very complex and require a plurality of different tools. For this purpose, multi-spindle heads are often used, where two or more spindles are arranged in various manners to be equipped with different tools, which sequentially machine the same workpiece, or perform work cycles sequentially on different workpieces, loaded in succession onto the machining center or machine tool.

In some circumstances, a multi-spindle head is not available, or situations may arise where, despite having multiple spindles available on the same multi-spindle head, not all of them may be used, for example due to space constraints on the tools or workpieces.

In other situations, the number of spindles available on an operating head may be insufficient relative to the number of tools needed to complete a work cycle.

In still other situations, it may be useful or necessary to perform several different work cycles in succession, possibly even on different workpieces, with the need to use a large number of tools, greater than the number of spindles available on the operating head.

In all these situations, and similar ones, it may be necessary to equip the machining center or machine tool with one or more tool magazines. In these tool magazines, seats are arranged, where various tools are housed, which may be mounted on one or more spindles with which the operating head(s), or machining heads, of the machining center, or machine tool, are equipped. It is thereby possible to perform a very complex cycle on a workpiece, or even different cycles on different workpieces in sequence, without the need for an operator to intervene to replace the tools installed on the operating heads. This makes the numerical control machine tool very flexible and efficient, and avoids the need for an operator to enter the working area of the machine tool, which would require the machine to stop and therefore result in a loss of production.

An example of a tool magazine with multiple seats is disclosed in EP 2626171. In this tool magazine, two support devices for two sets of tools are provided. The two support devices are superimposed on each other and each have a plurality of seats arranged circumferentially around the periphery of each device. The tools of the higher-level device may protrude inside openings obtained in the lower-level device. This tool magazine has a series of limitations due to the particular arrangement of the tool-holder seats. In particular, the magazine has an elevated extension in height, which requires large movements to remove tools from the various seats and insert tools therein. Furthermore, this known magazine has some limitations regarding the size of the tools which may be housed therein.

A further tool magazine with double set of seats for tools is disclosed in EP 3733341. In this known magazine, two sets of concentric and superimposed seats are provided. In the seats of a first set of seats, the tools are arranged with their rotation axis vertical and in the seats of the other set of seats the tools are arranged with their axis horizontal. This magazine is intended to work in combination with special operating heads. The arrangement of the tools, with axes oriented partly horizontally and partly vertically, makes it complex to manage the movements of the operating head for replacing the tools on the respective spindles.

TW201304902 discloses a tool magazine comprising a disc rotating about a vertical axis. The disc comprises a plurality of slots extending in radial directions around the rotation axis of the disc. A set of first tool seats comprises seats each of which is housed in a respective one of said slots. The seats of a second of seats for tools are arranged around the outer circular edge of the disc. This magazine has significant limitations related to the size of the tools that may be housed in the seats.

EP1364742 discloses a tool magazine comprising a set of concentric rings, mounted stationary on a fixed base. Each ring carries a plurality of seats for tools. The innermost ring is equipped with seats for tools only along an outer edge thereof, that is, facing the opposite side relative to the axis around which the rings are concentrically arranged. The remaining rings are equipped with seats for tools along both the outer edge and along the inner edge. To pick up the individual tools from the seats and arrange the tools in the seats, a manipulator arm is provided with a gripper member at the distal end of the arm. The proximal end of the manipulator arm is fixed to a central rotating shaft, around which the concentric rings are arranged. The length of the manipulator arm is variable. To manipulate the tools relative to the seats, rotation and extension/retraction movements of the manipulator arm are required. This magazine is particularly complex and expensive.

The subject of the present invention is an innovative tool holder that allows the limitations of prior art tool holders to be overcome or alleviated.

### SUMMARY

In order to overcome or alleviate the drawbacks of the known magazines described above, and to obtain further technical advantages that will be clear to those skilled in the art from reading the following text, a tool magazine is provided, comprising a revolving holder, supported to rotate about a rotation axis, wherein the revolving holder in turn comprises a set of first seats for receiving tools, i.e. tool-retention seats, and a set of second seats for receiving tools, i.e. tool-retention seats. The revolving holder further comprises an inner edge, facing an inner volume defined by the revolving holder, and an outer edge. The outer edge and the inner edge extend around the rotation axis. The first seats are arranged along the outer edge and face away from the inner volume. Conversely, the second seats are arranged along the inner edge and face toward the inner volume.

In embodiments disclosed herein, the revolving holder comprises a ring with an inner edge facing a rotation axis of the revolving holder, and an outer edge facing away from the rotation axis. The ring is rigidly connected to a base. The ring and the base are spaced apart along the rotation axis of the revolving holder and rigidly connected to each other. An inner volume of the revolving holder is formed between the ring and the base. First seats for tools are arranged along the outer edge of the ring, and second seats for the tools are arranged along the inner edge.

This configuration allows a large number of tools to be arranged in a relatively small space, obtaining a small-sized tool magazine, and in which the movements for picking up and releasing tools from and into the tool magazine seats are reduced compared the tool magazines of the prior art. Selecting the seats to insert tools or from which to extract tools is very simple. The picking and releasing of tools from and into the seats may easily be performed by the same operating head of a machine tool or machining center to which the magazine is connected. Unlike in other known structures, a manipulator is not required.

In some embodiments, the inner volume and the second seats are configured so as to allow: the extraction of a tool from each second seat with a movement in the inner volume from the second seat towards the rotation axis; and the insertion of a tool into a second seat with a movement in the inner volume in a direction oriented towards the second seat. In some embodiments, the aforesaid movements may be radial, i.e., according to trajectories orthogonal to the rotation axis of the magazine. However, this is not strictly necessary, as similar advantages may also be achieved with an only approximately radial, or even inclined, orientation of the second seat openings.

According to embodiments described herein, the first seats are configured to insert the tools in the first seats and extract the tools from the first seats with a movement away from and towards the outer edge of the revolving holder, respectively. The insertion and extraction movement may be radial, that is, according to a trajectory orthogonal to the rotation axis of the tool magazine. However, this is not strictly necessary. Similar advantages may also be achieved with a trajectory orientation that is only approximately radial, or even inclined with respect to the radial direction.

In some embodiments, the first seats and second seats are configured to hold the tools therein oriented with the axes thereof parallel to the rotation axis of the revolving holder.

To optimize space, the first seats and second seats may be arranged so that each first seat corresponds to a respective second seat. Preferably, each pair of corresponding seats are aligned radially with each other, or aligned along a direction that is only approximately radial, or even inclined relative to the radial direction.

In other embodiments, it may also be envisaged that the set of first seats comprises a number of seats greater than the set of second seats. This is due to the fact that the first seats are placed externally to the second seats and are thus distributed along a closed line (which surrounds the rotation axis of the support) of greater length relative to the one along which the second seats are arranged.

However, the possibility of having a greater number of second seats than the number of first seats cannot be ruled out. This may be useful, for example, to have a particularly long distance between consecutive first seats. This allows tools with particularly large radial dimensions to be housed in the external seats, i.e. in the first seats.

Advantageously, the first seats lie on a plane orthogonal to the rotation axis. Similarly, it is advantageous to envisage that the second seats also lie on a plane orthogonal to the rotation axis.

In advantageous embodiments the first seats and the second seats are substantially coplanar.

In some embodiments, the rotation axis is vertical. This may be particularly useful, for example, when the tool magazine is combined with a machining center or machine tool with a gantry structure, or with a movable vertical upright, with an operating head equipped with one or more spindles adapted to perform vertical movements to pick up and release tools from and into the tool magazine.

The ring, which defines the inner edge and the outer edge of the revolving holder, along which the seats for accommodating the tools are distributed, may be circular, or regular polygonal, with a first seat and a second seat along each side of the regular polygon. This configuration may simplify the programming of movements for picking up and releasing tools. In fact, each seat may be placed in the same pick-up/release position by simply rotating the support about the rotation axis. However, some of the advantages described herein are also obtained if the support has a ring (or other suitable component) that defines an inner edge and an outer edge that are not regular, that is, they are not regular circular or polygonal shapes (that is, with sides of equal length). For example, the inner edge and the outer edge may be elliptical, or have an irregular polygonal shape.

Advantageously, the distance between the ring and the base of the revolving holder of the magazine may be equal to or greater than the maximum axial dimension of the tools.

According to another aspect, a numerically controlled machining center, i.e., a machine tool, is disclosed herein, comprising: a supporting structure; at least one operating head with at least one tool-holder spindle; at least one workpiece holder for locking workpieces, wherein the workpiece holder and the operating head are movable relative to each other along a plurality of numerically controlled axes; and at least one tool magazine configured as defined above and/or as described below.

Further advantageous features of the tool magazine and of the numerically controlled machining center, or machine tool, are described below with reference to an embodiment and are defined in the attached claims.

According to a further aspect, disclosed herein is a tool magazine, comprising a revolving holder, supported to rotate about a rotation axis, wherein: the revolving holder comprises a ring and a base, spaced apart from one another along the rotation axis and rigidly connected to each other; an inner volume of the revolving holder is formed between the ring and the base; the ring comprises an outer edge and an inner edge extending around the rotation axis; a set of first tool-retention seats are arranged along the outer edge of the ring and are oriented opposite the inner volume; a set of second tool-retention seats are arranged along the inner edge and face towards the inner volume. A rotating shaft can extend from the base, facing away from the inner volume, such that the entire inner volume remains free and available for tool manipulation. This tool magazine may include one or more of the features set forth in the appended dependent claims.

### BRIEF DESCRIPTION OF THE DRAWINGS

The invention will be better understood by following the description and the attached drawings, which illustrate an exemplary and non-limiting embodiment of the invention. More in particular, the drawings show in:
Fig. 1 a plan view of a numerically controlled machining center comprising two tool magazines according to the present invention;
Fig. 2 a view according to II-II of Fig. 1;
Fig. 3 an enlargement of one of the tool magazines of the machining center of Figs. 1 and 2 in a plan view; and
Fig. 4 a section according to IV-IV of Fig. 3.

### DETAILED DESCRIPTION

In the present description, reference is made to an exemplary machining center having a gantry structure with a pair of operating heads or machine heads, which machining center is equipped with two tool magazines. It should, however, be understood that the machining center, or machine tool, described herein is an example and that the tool magazine of the present invention may be used in machining centers or numerically controlled machine tools of shapes and architectures that are very different from that illustrated in the attached drawings and described below.

Furthermore, it should be understood that in this context the term numerically controlled achining center" and the term numerically controlled "machine tool" are used synonymously.

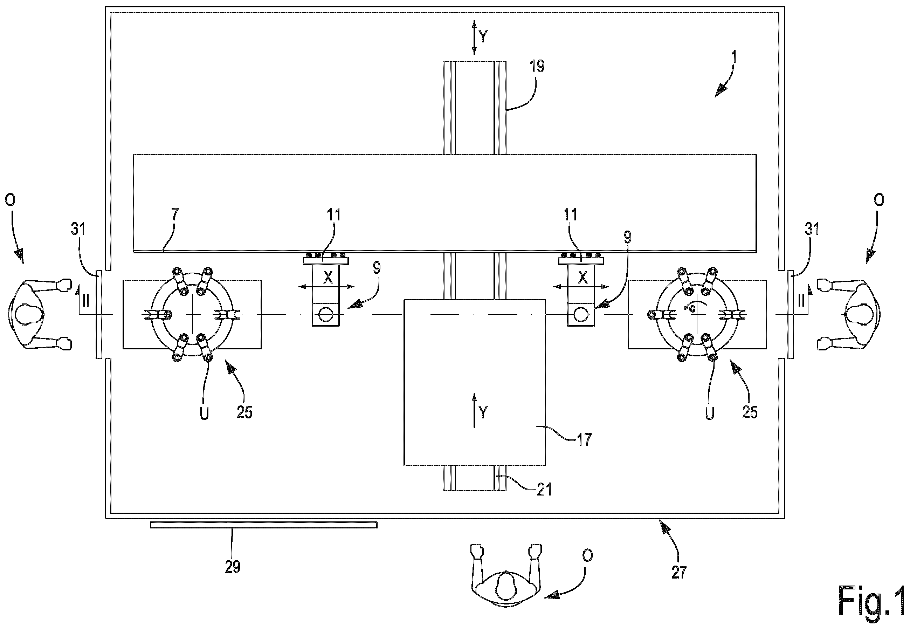

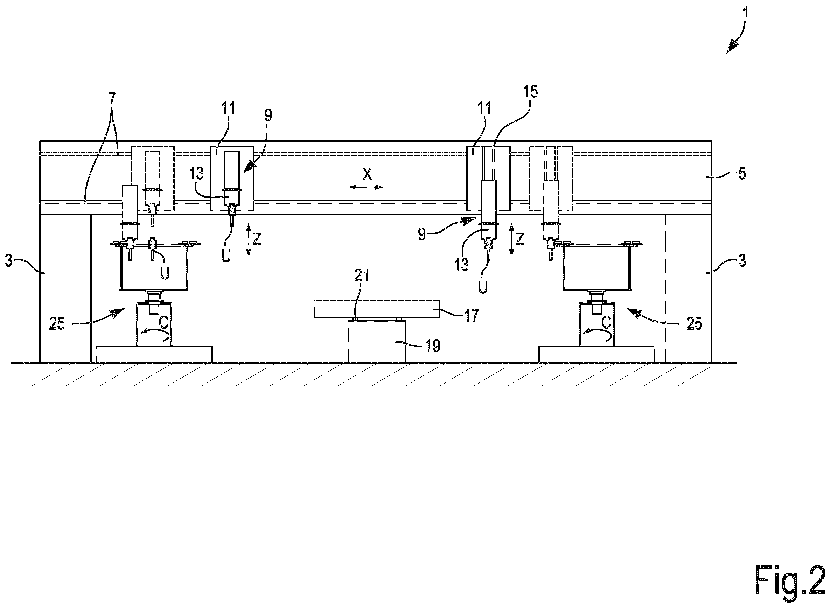

Coming now to the drawings, and with specific reference to Figs. 1 and 2, the numerically controlled machining center is indicated overall with 1. In the illustrated embodiment, the machining center 1 comprises a gantry-type supporting structure with a pair of uprights 3 supporting a crosspiece 5. The crosspiece 5 comprises guides 7 for the sliding of one or more slides carrying respective operating heads. In the illustrated embodiment, the machining center 1 comprises two operating heads 9 each of which is supported by a slide 11 movable along a horizontal numerically controlled translation axis indicated by X and parallel to the extension of the guides 7 integral with the crosspiece 5.

In Fig. 2 two alternative positions of the two operating heads 9 are shown in dashed lines.

In some embodiments, each operating head 9 may comprise a variable number of spindles for a corresponding number of tools. By way of example, in the illustrated example each operating head 9 comprises a single spindle for a single tool U which rotates about a rotation axis which, in the illustrated condition, is positioned vertically. Each spindle, indicated by 13, is carried by the operating head 9 so that it may slide along a vertical numerically controlled translation axis Z. For this purpose, each slide 11 may comprise guides 15 orthogonal to the guides 7 integral with the crosspiece 5.

With this architecture, each operating head 9 is movable along two respective numerically controlled translation axes X and Z to perform work cycles on a piece, not shown, which may be fixed on a workpiece holder table 17. The workpiece holder table 17 may have any configuration depending on the type of workpieces to be machined. The workpiece holder table 17 may be equipped with workpiece locking devices, which may also be configured according to the type of workpieces to be machined. The locking devices may be, for example, mechanical, hydraulic, pneumatic, or of another suitable type.

In some embodiments, the workpiece holder table 17 may be supported on a base 19.

In the illustrated embodiment, the base 19 extends in a horizontal direction Y, orthogonal to the directions X and Z, which represents a third numerically controlled translation axis of each operating head 9. Thereby, each piece mounted on the workpiece holder table 17 may be machined by means of numerically controlled movements along three translation axes X, Y, Z.

In some embodiments, one or both operating heads 9 may be equipped with numerically controlled movements around further numerically controlled axes, e.g. one or more rotary axes, not shown.

In the plan view of Fig. 1, 21 indicates the sliding guides of the workpiece holder table 17 along the base 19.

Alternatively, it is also possible to equip the gantry on which the operating heads 9 are mounted with a numerically controlled movement in the direction Y, in which case the workpiece holder table 17 may be fixed.

In other embodiments, multiple workpiece holder tables 17 may be provided, for example one for each head, and in this case too each workpiece holder table may be movable along the numerical control axis Y, or fixed, in which case the movement along the numerical control axis Y will be attributed to the operating heads. Especially if the machining center has two workpiece holder tables 17, it is preferable that the movement along the numerically controlled axis Y is assigned to the workpiece holder tables 17, so that each operating head 9 may machine workpieces mounted on the corresponding workpiece holder table 17 in a completely autonomous manner with respect to the other operating head.

In the illustrated embodiment, the machining center 1 comprises two tool magazines each indicated with 25. The two tool magazines 25 may be the same or different from each other. Preferably, both tool magazines 25 are configured as described below and form the specific subject of the present invention.

The use of two tool magazines is particularly advantageous in this case, where two operating heads 9 move on the same pair of guides 7, each of which may use one of the two tool magazines 25, avoiding collisions between the slides 11 of the two operating heads 9.

In other embodiments, for example if a single operating head 9 movable along the crosspiece 5 is envisaged, only one tool magazine 25 may be envisaged.

However, the possibility of providing two tool magazines even in a machining center equipped with a single operating head is not excluded, for example when it is advantageous or necessary to have a very high number of interchangeable tools to perform one or more work cycles on one or more types of workpieces to be selectively machined, which are sequentially mounted on the workpiece holder table 17. Similarly, it is possible to use a single tool magazine 25 for two operating heads, if the number of tools available is sufficient. In this case, the position of the tool magazine 25 and the movements of the operating heads must be programmed with particular attention to avoid collisions between the operating heads during the tool change phase.

The machining center 1 described so far is enclosed within a area protected by a protection generally indicated by 27. The protection 27 may have a main opening 29, equipped with a suitable sliding access door, for example, and placed in front of the work area of the operating heads 9. The protection 27 may also include a lateral opening 31 on each side, to selectively access one or the other of the two tool magazines 25. Each lateral opening 31 may be closed by a sliding door.

Advantageously, the protection 27 and the sliding doors, or other closing members of the openings 29 and 31, may be transparent to allow an operator (indicated by O) outside to observe the work cycle being carried out by the machining center 1 and to verify the correct sequence of operating steps. In particular, the arrangement allows the operator to verify that the machining center performs the correct machining operations with the correct replacement of the various tools located in one or the other of the two tool magazines 25.

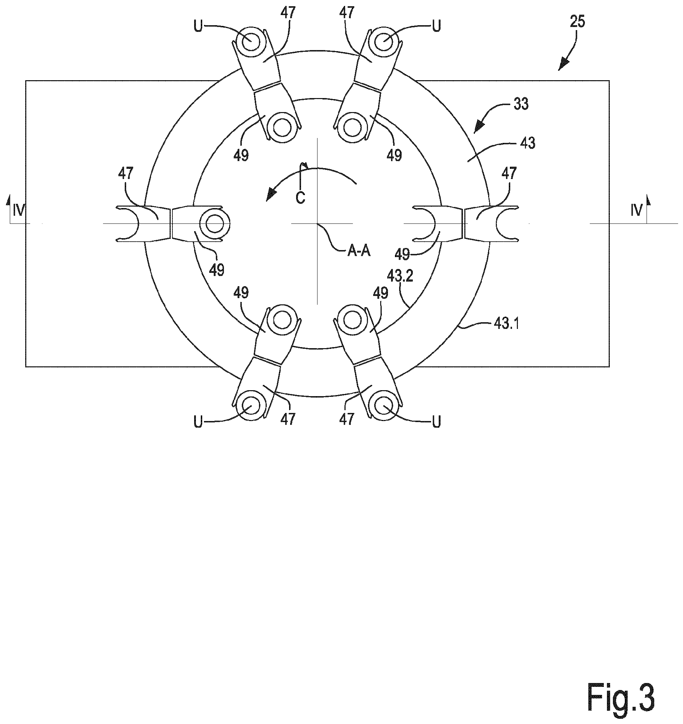

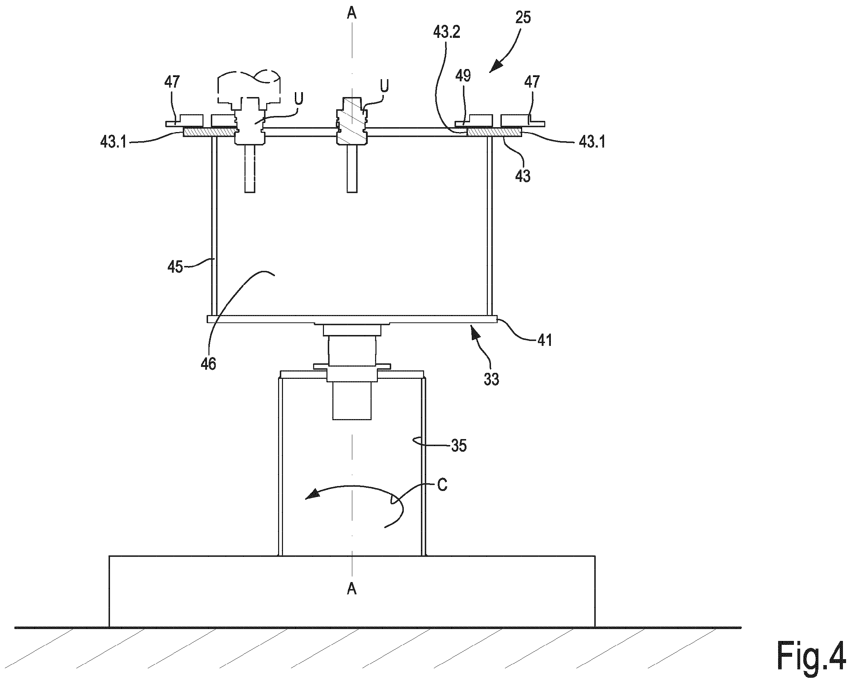

The structure of the tool magazines 25 is illustrated in detail in the enlargement of Figs. 3 and 4, which respectively illustrate a plan view and a sectional view along IV-IV of one of the tool magazines 25.

The tool magazine 25 comprises a revolving holder 33, capable of rotating about a vertical axis A-A supported by a base 35. C indicates a numerically controlled rotational movement of the revolving holder 33 about the vertical rotation axis A-A. The revolving holder 33 is fixed to a rotating shaft that connects the revolving holder 33 to the base 35.

In this embodiment, the revolving holder 33 comprises an approximately cylindrical cup-like structure, with a bottom or base 41 and an overlying ring 43. The bottom or base 41 and the ring 43 are rigidly connected to each other.

The ring 43 has an outer perimeter edge 43.1 and an inner perimeter edge 43.2. The ring 43 and the base 41 are spaced from each other by a structure 45, which may be formed for example by vertical bars, a cylindrical wall, preferably transparent, or any other structure capable of rigidly connecting the ring 43 to the base 41 leaving an empty inner volume 46, contained between the ring 43, the base 41 and the structure 45. Advantageously, the rotating shaft is fixed to the bottom or base 41 and extends therefrom in a direction opposite to the ring 43, i.e. away from the inner volume 46, such that the entire volume between the ring 43 and the bottom or base 41 is unobstructed and free for easy insertion and removal of tools.

Along the ring 43, which forms the upper part of the revolving holder 33, seats are arranged for receiving tools U, i.e. tool-retention seats.

More in particular, as visible in the plan view of Fig. 4, a set of first seats 47 are provided along the ring 43, arranged along the outer edge 43.1 of the ring 43, thus forming housings open radially outwards for the respective tools U.

A set of second seats 49 are arranged along the inner edge 43.2 of the ring 43. In practice, the second seats 49 are therefore open radially inwards and face the rotation axis A-A of the revolving holder 33 of the tool magazine 25.

In the illustrated embodiment, the first seats 45 and the second seats 49 are oriented in a radial direction. However, this is not strictly necessary. In other embodiments, the first seats 47 and the second seats 49 may be open in a direction that is not exactly radial, but still with an orientation that allows the insertion and extraction of the tools with a movement having a radial component in a centripetal direction, i.e., towards the axis A-A, and with a movement having a radial component in a centrifugal direction, i.e., away from the axis A-A. For example, the first seats 47 and the second seats 49 may be oriented so that the insertion and extraction trajectories of the respective tools are inclined with respect to the radial direction by a non-zero angle, for example typically between 0° and 60°, preferably between 0° and 30°, or between 0° and 20°.

Advantageously, the inner volume 46 and the second seats 49 are configured so as to allow: the extraction of a tool U from each second seat 49 with a movement, having at least a radial component, from the second seat towards the rotation axis A-A, i.e. a movement directed towards the axis A-A; and the insertion of a tool U into the second seats 49 with a movement having a radial component from the inner volume towards the second seat, i.e. a movement away from the axis A-A. Similarly, the first seats 47 are configured to insert and remove the tools U through a movement having a radial component respectively away from and towards the rotation axis.

As can be seen in particular in the section of Fig. 4, in this embodiment, the first seats 47 and the second seats 49 are coplanar with each other, see in particular Fig. 4.

Each seat may be configured as a fork, placed on a horizontal plane, configured to accommodate and hold a respective tool U. The seat may be equipped with a locking device, which prevents a tool U housed therein from accidentally falling from the respective seat. The locking device may be deactivated, freeing the tool located in the respective seat, via the operating head 9 which, in this embodiment, is configured to interact directly with the tool magazine 25. This means that each operating head 9 is controlled to directly pick up each tool U from the seat 47 or 49 of the tool magazine 25 and to deposit a tool U from the operating head 9 into the tool magazine 25, without the need for an intermediate manipulator.

However, the possibility of using a manipulator associated with the operating head 9 and/or the tool magazine 25, to transfer the tools from the tool magazine 25 to the operating head 9 and vice versa, is not excluded. This may be useful in certain cases, for example to change the orientation of the rotation axis of the tool, passing from the seat 47, 49 of the tool magazine 25 to the spindle of the operating head 9.

In the illustrated embodiment, each radially outer first seat 47 corresponds to a radially inner second seat 49. In some embodiments the seats may therefore be arranged in pairs and may be integral with each other, in the sense that each first seat 47 may be integral with a corresponding second seat 49.

With this arrangement, the entire inner volume 46 of the revolving holder 33 is available for handling tools that must be picked up from the radially inner second seats 49 or deposited on such second seats.

It is thereby possible to house tools in the radially inner seats 49, which may also have large radial and axial dimensions. The movement of the tools for their insertion and removal relative to the radially inner seats 49 may exploit the entire inner volume 46 enclosed in the support 33, which is defined peripherally by the radially inner edge 43.2 of the ring 43 and by the structure 45.

Contrary to what occur in the tool magazines of the prior art, the tools U that are inserted into or removed from the second seats 49 may have very large dimensions, compatibly with the distance of the second seats 49 from the structure 45, but the size of such tools in the radial direction is not limited by the size of any openings which, instead, are necessarily present in the tool magazines of the prior art cited in the introductory part of the present description.

The illustrated arrangement also allows the first radially outer seats 47 and the second radially inner seats 49 to be arranged coplanar with each other, rather than superimposed and at a mutual distance along the rotation axis A-A, as instead occurs in the tool magazines of the prior art. This allows for tool replacement movements to be performed, which have a limited stroke in the direction Z, to the advantage of the compactness of the machining center structure and the speed of execution of tool replacement operations. In fact, the stroke in the direction Z that the spindles 13 must perform to reach the tool magazine 25 is reduced relative to what is necessary in tool magazines in which the seats are arranged at different heights, i.e. superimposed and spaced apart, as foreseen in the prior art referred to in the introductory part of the present description.

Furthermore, by arranging all the seats 47 and 49 coplanar with each other, it is easier to program the relative movements between the operating head 9 and the tool magazine 25.

A further advantage lies in that the number of seats of the tool magazine 25 may be greater than the number of seats of the magazines of the prior art, with the same overall outer dimensions of the tool magazine 25.

The structure of the tool magazine 25 described herein also allows easy visibility of all the tools during the operating cycle, so that an operator who is outside the protection enclosure 27 may visually verify the correct execution of the work cycle, including the steps of replacing the tools gradually present on the operating heads.

The particular structure of the tool magazine 25 also allows maximizing the number of tools thatcan be housed in the tool magazine, in a smaller footprint relative to what can be obtained in current state-of-the-art magazines with the same number of seats.

In some embodiments, such as the one illustrated, the operating head and the tool magazine 25 perform all the movements for picking up and depositing the tools. In particular, the tool magazine 25 performs a rotation movement about the axis A-A thereof to arrange the seat from which the tool must be taken, or in which the tool must be deposited by the operating head 9, under the operating head. The operating head performs the remaining translation movements along the numerically controlled axes X and Z, to pick up/deposit the tools.

However, different solutions (not shown) are not excluded, in which, for example, an intermediate manipulator is provided which picks up the tools from the tool magazine 25 and transfers them to the operating head 9 and vice versa. The intermediate manipulator can, for example, have movements along one or more numerically controlled axes. In some embodiments, an intermediate manipulator may be provided which raises and lowers the tools, so that the height at which the seats of the tool magazine 25 are located may be lower relative to the minimum height reachable by the spindle(s) of the operating head 9.

When an intermediate manipulator is provided, this may optionally be configured to simultaneously manipulate two tools, so that in a single cycle of movements it may pick up a tool from the tool magazine 25, transfer it to the operating head 9, pick up from the operating head 9 the tool to be transferred to the tool magazine 25, transfer the tool picked up from the tool magazine 25 to the operating head 9 and finally transfer the tool removed from the operating head 9 to the tool magazine 25.

In some cases, it is also possible to envisage that the manipulator is movable about a numerically controlled rotation axis, to pick up tools from a tool magazine 25 in which the tools are located with the rotation axes thereof oriented differently relative to the orientation of the spindle(s) of the operating head 9.

## Claims

1. A tool magazine (25), comprising a revolving holder (33), supported to rotate about a rotation axis (A-A), wherein:
the revolving holder (33) comprises a set of first seats (47) for receiving tools (U), wherein the first seats (47) are arranged along an outer edge (43.1) of the revolving holder (33) extending around the rotation axis (A-A) of the revolving holder; and a set of second seats (49) for receiving tools (U);
the revolving holder (33) comprises an inner edge (43.2), facing an inner volume (46) defined by the revolving holder (33), and;
the inner edge (43.2) extends around the rotation axis (A-A);
the first seats (47) are oriented outside the inner volume (46); and
**characterized in that**: the revolving holder (33) comprises a ring (43) and a base (41), spaced apart along the rotation axis (A-A) and rigidly connected to each other; an inner volume (46) of the revolving holder (33) is formed between the ring and the base (41); the ring comprises the outer edge (43.1), along which the first seats (47) are arranged, and an inner edge (43.2) extending around the rotation axis and facing the inner volume (46); the second seats (49) are arranged along the inner edge (43.2) and face the inner volume (46).

2. The tool magazine (25) of claim 1, wherein the base (41) is integral with a rotating shaft, which connects the revolving holder (33) to a fixed base (35); wherein preferably the shaft extends from the base in a direction away from the inner volume (46).

3. The tool magazine (25) of claim 1 or 2, wherein the outer edge (43.1) and the inner edge (43.2) are continuous annular edges, preferably of regular circular or polygonal shape.

4. The tool magazine (25) of any one of the preceding claims, wherein the inner volume (46) and the second seats (49) are configured to engage and disengage the tools (U) by a movement within the inner volume (46), respectively away from and toward the inner edge (43.2) of the revolving holder (33).

5. The tool magazine (25) of any one of the preceding claims, wherein the first seats (47) are configured to engage and disengage the tools (U) by a movement toward and away from the outer edge (43.1) of the revolving holder (33).

6. The tool magazine (25) of any one of the preceding claims, wherein the first seats (47) and the second seats (49) are configured to hold the tools (U) oriented with the axes thereof parallel to the rotation axis (A-A).

7. The tool magazine (25) of any one of the preceding claims, wherein each first seat (47) corresponds to a respective second seat (49), radially aligned with each other.

8. The tool magazine (25) of any one of the preceding claims, wherein the first seats (47) lie in a plane orthogonal to the rotation axis (A-A).

9. The tool magazine (25) of any one of the preceding claims, wherein the second seats (49) lie in a plane orthogonal to the rotation axis (A-A).

10. The tool magazine (25) of any one of the preceding claims, wherein the first seats (47) and the second seats (49) are substantially co-planar.

11. The tool magazine (25) of any one of the preceding claims, wherein the rotation axis (A-A) is vertical.

12. The tool magazine (25) of any one of the preceding claims, wherein the distance between the ring (43) and the base (41) is equal to or greater than a maximum axial dimension of the tools (U) to be housed in the tool magazine (25).

13. A numerically controlled machining center (1), comprising:
a supporting structure;
at least one operating head (9) with at least one tool-holder spindle (13);
at least one workpiece holder (17), wherein the workpiece holder (17) and the operating head (9) are movable relative to each other along a plurality of numerically controlled axes (X, Y, Z);
and at least one tool magazine (25) according to any one of the preceding claims.

14. The numerically controlled machining center (1) of claim 13, wherein the operating head (9) is provided with a direct tool pick-up and release motion from and into the tool magazine (25).

15. A tool magazine (25), comprising a revolving holder (33), supported to rotate about a rotation axis (A-A), wherein:
the revolving holder (33) comprises a ring (43) and a base (41), spaced apart from one another along the rotation axis (A-A) and rigidly connected to each other;
an inner volume (46) of the revolving holder (33) is formed between the ring (43) and the base (41);
the ring (43) comprises an outer edge (43.1) and an inner edge (43.2) extending around the rotation axis (A-A);
a set of first tool-retention seats (47) are arranged along the outer edge (43.1) of the ring (43) and are oriented opposite the inner volume (46);
a set of second tool-retention seats (49) are arranged along the inner edge (43.2) and face towards the inner volume (46).
